Europäisches Patentamt

**(19)** European Patent Office

Office européen des brevets

**(11)** **EP 0 609 288 B1**

**(12)** **EUROPEAN PATENT SPECIFICATION**

**(45)** Date of publication and mention
of the grant of the patent:
**13.03.1996 Bulletin 1996/11**

**(51)** Int. Cl.$^6$: **B01D 53/56**, F23G 7/06

**(86)** International application number: **PCT/SE92/00576**

**(21)** Application number: **92921379.1**

**(22)** Date of filing: **24.08.1992**

**(87)** International publication number:
**WO 93/07954 (29.04.1993 Gazette 1993/11)**

**(54)** **A METHOD OF REMOVING NITROGEN OXIDES FROM A GAS FLOW BY USING A COMBUSTION EXCHANGER**

METHODE ZUR ENTFERNUNG VON STICKSTOFFOXYDEN AUS EINEM GASSTROM UNTER ANWENDUNG EINES VERBRENNUNGSAUSTAUSCHERS

PROCEDE POUR ELIMINER LES OXYDES D'AZOTE CONTENUS DANS UN FLUX DE GAZ, AU MOYEN D'UN ECHANGEUR A COMBUSTION

**(84)** Designated Contracting States:
**AT BE CH DE DK ES FR GB GR IT LI LU MC NL SE**

**(30)** Priority: **16.10.1991 SE 9103008**

**(43)** Date of publication of application:
**10.08.1994 Bulletin 1994/32**

**(73)** Proprietor: **HEED, Björn**
**S-412 61 Göteborg (SE)**

**(72)** Inventor: **HEED, Björn**
**S-412 61 Göteborg (SE)**

**(74)** Representative: **Lindberg, Klas Valter Bo et al**
**AWAPATENT AB,**
**Södra Hamngatan 37-41,**
**P.O. Box 11394**
**S-404 28 Göteborg (SE)**

**(56)** References cited:
**WO-A-89/10182**          **WO-A-90/05578**
**SE-B-   441 623**          **SE-B-   466 433**

Printed by Rank Xerox (UK) Business Services
2.9.12/3.4

## Description

Most combustion systems incorporating combustion engines emit exhausts containing nitrogen oxides. Emission of nitrogen oxides into the atmosphere is a potential danger to the environment that has many aspects, such as excessive fertilization, acidification, direct poisonous effects and secondary formation of poisonous substances, such as photo-chemical oxidants, for example.

The exhausts from combustion systems mostly contain a certain oxygen surplus originating from the combustion stage and they are oxidants by nature, which makes it difficult to reduce the nitrogen oxides by using ordinary reducing agents. However, one has found that it is quite possible to employ various methods of what is known as selective reduction of the nitrogen oxides. As the reducing agent is used ammonia, carbamide or other substances that contain nitrogen, such as amines. To simplify, the method could be said to involve reacting positive valence nitrogen in nitrogen oxides with negative valence nitrogen to form nitrogen of zero valence, i.e. harmless nitrogen gas molecules.

In the past, most processes for the reduction of nitrogen oxides levels have concentrated on those compositions most efficient at maximizing nitrogen oxides reductions, or on achieving nitrogen oxides reductions without also causing the production of substantial amounts of other pollutants, such as ammonia or carbon monoxide. What was generally ignored, though, was the cost of such compositions and the ability to effectively deliver them under the destabilizing conditions existing in the effluents which contain nitrogen oxides.

WO 89/10182 describes a composition for reducing the presence of nitrogen oxides in a high temperature environment, such as that of the effluent from the combustion of a carbonaceous fuel, which composition is low cost yet able to be effectively introduced through an injector having an injector tip into such a high temperature environment.

It is also known to add ammonia gas to the waste gases in order to reduce the content of oxides of nitrogen by the following reaction:

$$4NH_3 + 4NO + O_2 \rightarrow 4N_2 + 6H_2O$$

However, this reaction only proceeds in a temperature range of 870 °C to 1090 °C.

WO 90/05578 discloses that the addition of atomised ammoniacal water to waste gases containing $NO_x$ pollutants has a substantially greater effect in reducing the $NO_x$ content of the post-combustion waste gases than would be expected. It is thought that this surprising effect may be due to the rapid vapourization of the water and then its dissociation, which causes thorough mixing of the ammonia with the waste gases. At the same time the temperature of the waste gases is reduced.

Also, the dissociation of the water inhibits the oxidation of the ammonia at high temperatures, i.e. above 1090 °C, thus allowing the reduction of $NO_x$ to take place at these high temperatures.

To allow the above selective reduction reactions to be utilized does, however, require either medium high temperatures (200-500°C) and the effects of a stationary catalyst in honeycomb or particle-bed form, a method known as selective catalytic reduction, SCR, or the effect may be achieved without stationary catalysts but in this case considerably higher temperatures (500-900°C) are required. By analogy, the latter method usually is referred to as selective non-catalytic reduction, SNCR.

Whichever method is adopted, it is necessary to pay attention to and carefully control the amount of reducing agent that is added in order to avoid excessive effluents of such agents, too, which are not either quite harmless. The reducing agents not spent in the reaction with nitrogen oxides will exit together with the gas stream as so called "slip". Sometimes, particularly in the case of SNCR, it is disadvantageous to have to work at comparatively high temperatures. Heating of large volumes of gas might be very expensive and entail considerable operation costs.

In accordance with the teaching of the subject invention a combustion exchanger, according to EP-A-0 218 590 being an apparatus in which the gas is heated in a fixed bed to self combustion and/or self decomposition temperature mainly without external energy supply after a starting up stage, by means of regenerative counter current heat exchange, may be used to reduce the nitrogen oxide contents in a gas flow. This eliminates the problem of slip in reducing agents while at the same time the heating costs are kept low.

The method could be described as follows: When the gas flow does not contain suitable reducing agents, such agents are added and are mixed into the gas flow. The latter is then passed through a combustion exchanger, as defined above, wherein the gas is heated successively up to a high temperature level, whereafter it is successively cooled to a temperature level close to the starting temperature. Since heat can be borrowed only temporarily by the gas and the main portion of the heat is immediately recovered by the combustion exchanger, the energy comsumption of this heat treatment is low.

The gas is heated successively, and thus it will pass through the temperature range within which the reaction of nitrogen oxide reduction occurs. Thus, amounts of reducing agents are being spent during the desired reaction process, any excess amounts of reducing agent being left in the gas. However, the gas is thereafter heated further to a temperature ensuring reaction also of these excess amounts, which are destroyed through reaction with the oxygen contained in the gas.

To summarize, the treatment in the combustion exchanger comprises both reduction reactions and oxidation reactions, eliminating nitrogen oxides as well as unspent nitrogen oxide reducing agents. The oxidation step there fore could provide the added advantage of removing also other pollutants that can be oxidized, such as carbon monoxide, hydrocarbons, hydrogen gas, and so on.

In the case of gas mixtures, and particularly with respect to the components therein that can be oxidized, the selective reduction of nitrogen oxides that is primarily aimed for should, for optimum efficiency, be effected at different temperature levels, depending on the composition of the gas. The optimum temperature further depends on the reducing agent that is used. In this respect the use of a combustion exchanger has the advantage of exposing the gas mixtures to all relevant temperatures, and consequently the chances of reaction are very favourable. In other words, the composition of the gas need not be known beforehand, nor is it necessary to adapt the heating to different situations.

The nitrogen oxide reducing agents that are added to the gas flow could be in gaseous form, for instance ammonium from a pressurized vessel. This makes admixture into the gas flow prior to entrance into the combustion exhanger easy. Since the added amount normally is small in comparison with the volume of the gas, the addition could also be in the form a liquid which is vaporized as it is admixed with the gas flow. In this case, the liquid could either be in the form of an essentially pure substance or in the form of a liquid solution of the active ingredient.

The addition need not necessarily consist of one single active substance. Since the treatment in the combustion exchanger involves treatment at all relevant temperature levels, mixtures of a several different components having different optimum reaction temperatures, could be used without disadvantage. The addition could also contain a number of irrelevant components without disturbance. Those not used for the nitrogen oxide reduction process are destroyed at higher temperature levels. For this reason it may be economically advantageous as well as environmentally safe to use urine and liquid manure for the nitrogen oxide reduction in accordance with the method of the invention.

## Claims

1. A method of removing nitrogen oxides from a gas flow comprising oxygen by using a combustion exchanger, **characterized** by mixing one or several reducing nitrogen compounds with the gas before the latter is treated in the combustion exchanger wherein the gas is heated successively up to a high temperature level, whereafter it is successively cooled to a temperature level close to the starting temperature.

2. A method as claimed in claim 1, **characterized** in that ammonium is used as the reducing nitrogen compound, said ammonium being sprayed into the gas flow in liquid or gas form.

3. A method as claimed in claim 1, **characterized** in that a liquid solution of ammonium is used as the reducing nitrogen compound, said liquid solution being sprayed into and vaporized in the gas flow.

4. A method as claimed in claim 1, **characterized** in that a liquid solution of carbamide is used as the reducing nitrogen compound, said liquid solution being sprayed into and vaporized in the gas flow.

5. A method as claimed in claim 1, **characterized** in that animal urine and animal liquid manure are used as the nitrogen oxide reducing agent.

## Patentansprüche

1. Verfahren zum Entfernen von Stickoxiden aus einer Gasströmung mit Sauerstoff unter Verwendung eines Verbrennungsaustauschers, gekennzeichnet durch das Vermischen von einer oder mehrerer reduzierender Stickstoffverbindungen mit dem Gas, bevor das letztere in dem Verbrennungsaustauscher behandelt wird, wobei das Gas stufenweise auf einen hohen Temperaturwert erhitzt und danach stufenweise auf einen nahe der Anfangstemperatur gelegenen Temperaturwert gekühlt wird.

2. Verfahren nach Anspruch 1, dadurch gekennzeichnet, daß Ammonium als reduzierende Stickstoffverbindung verwendet wird, wobei das Ammonium in flüssiger oder gasförmiger Form in die Gasströmung gesprüht wird.

3. Verfahren nach Anspruch 1, dadurch gekennzeichnet, daß eine Flüssiglösung aus Ammonium als reduzierende Stickstoffverbindung verwendet wird, wobei die Flüssiglösung in die Gasströmung gesprüht und dort verdampft wird.

4. Verfahren nach Anspruch 1, dadurch gekennzeichnet, daß eine Flüssiglösung aus Carbamid als reduzierende Stickstoffverbindung verwendet wird, wobei die Flüssiglösung in die Gasströmung gesprüht und dort verdampft wird.

5. Verfahren nach Anspruch 1, dadurch gekennzeichnet, daß Tierurin und flüssiger Tierdung als stickoxidreduzierendes Mittel verwendet werden.

## Revendications

1. Procédé d'élimination d'oxydes d'azote d'un écoulement gazeux comprenant de l'oxygène en utilisant un échangeur de combustion, caractérisé en ce qu'on mélange un ou plusieurs composés réducteurs de l'azote avec le gaz avant que ce dernier soit traité dans l'échangeur de combustion, dans lequel le gaz est successivement chauffé jusqu'à un niveau de température élevé, après quoi il est successivement refroidi jusqu'à un niveau de température proche de la température de départ.

2. Procédé selon la revendication 1, caractérisé en ce qu'on utilise de l'ammonium en tant que composé réducteur de l'azote, ledit ammonium étant pulvérisé dans l'écoulement gazeux dans une forme liquide ou gazeuse.

3. Procédé selon la revendication 1, caractérisé en ce qu'on utilise une solution liquide d'ammonium en tant que composé réducteur de l'azote, ladite solution liquide étant pulvérisée et vaporisée dans l'écoulement gazeux.

4. Procédé selon la revendication 1, caractérisé en ce qu'on utilise une solution liquide de carbamide en tant que composé réducteur de l'azote, ladite solution liquide étant pulvérisée et vaporisée dans l'écoulement gazeux.

5. Procédé selon la revendication 1, caractérisé en ce qu'on utilise de l'urine d'animaux et du fumier liquide d'animaux en tant qu'agent de réduction des oxydes d'azote.